(19) Europäisches Patentamt
European Patent Office
Office européen des brevets

(11) Numéro de publication: **0 011 572**
**B1**

(12) **FASCICULE DE BREVET EUROPEEN**

(45) Date de publication du fascicule de brevet: **27.01.82**

(51) Int. Cl.³: **C 04 B 43/00**, C 04 B 25/02

(21) Numéro de dépôt: **79400870.6**

(22) Date de dépôt: **14.11.79**

(54) **Produit isolant et procédé pour sa fabrication.**

(30) Priorité: **14.11.78 FR 7832154**

(43) Date de publication de la demande: **28.05.80 Bulletin 80/11**

(45) Mention de la délivrance du brevet: **27.01.82 Bulletin 82/4**

(84) Etats contractants désignés: **AT BE CH DE GB IT LU NL SE**

(56) Documents cités:
**AU-A-489 686**
**FR-A-1 252 849**
**FR-A-1 330 175**
**FR-A-2 228 127**
**FR-A-2 252 313**
**US-A-2 893 888**

(73) Titulaire: **Firth, Thierry Benedict, 210 Avenue Marx-Dormoy, F-92120 Montrouge (FR)**

(72) Inventeur: **Firth, Thierry Benedict, 210 Avenue Marx-Dormoy, F-92120 Montrouge (FR)**

(74) Mandataire: **Barnay, André François et al, Cabinet Barnay 80 rue Saint-Lazare, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 011 572 B1

## Produit isolant et procédé pour sa fabrication

Le secteur technique de l'invention est notamment celui des matériaux de construction.

On connaît des produits isolants à base de fibres minérales et d'un liant hydraulique. Ces produits sont obtenus en projetant sur un support les fibres minérales préalablement mélangées avec le liant hydraulique, par exemple du ciment portland, qui en présence d'eau fait prise plus ou moins rapidement et durcit.

On connaît aussi des produits obtenus par incorporation de fibres d'amiante dans du ciment portland. On brasse la pâte obtenue et on forme une plaque pouvant prendre des formes variées qu'on passe à l'étuve pour en accélérer le durcissement. On obtient ainsi des gaines, tuyaux, récipients décoratifs, etc. Pour colorer ces produits, on peut ajouter divers pigments.

Pour obtenir des produits isolants, il est connu de projeter sur un support des fibres minérales et une colle à base d'alcool polyvinylique en dispersion dans l'eau. Cependant, ces produits ne sont pas solides. De plus, comme ils sèchent relativement lentement à l'air, quand on incorpore un pigment celui-ci n'a finalement pas une répartition uniforme et a tendance à descendre par gravité en formant des auréoles.

La présente invention a pour but de fournir un matériau de construction isolant thermiquement et acoustiquement, coloré uniformément dans la masse.

Un autre but de l'invention est de fournir des pièces colorées et isolantes de formes diverses.

L'invention concerne un procédé de fabrication d'un produit isolant et incombustible comprenant des particules, un liant organique constitué par un agent filmogène, un agent de coagulation de cet agent filmogène et éventuellement des pigments et des charges, selon lequel on effectue les opérations suivantes:

a) on projette sur un support une solution colloïdale dans un solvant de l'agent filmogène;
b) sur le support ainsi revêtu, on projette la solution colloïdale et simultanément on projette un mélange de particules, de l'agent de coagulation et éventuellement de pigments et de charges.

On obtient ainsi sur le support, au moment de la projection, un gel résultant de la réaction de l'agent filmogène et de l'agent de coagulation, gel qui est réparti uniformément dans la masse de particules et retient celles-ci en les collant. Après séchage, le gel se durcit et la produit obtenu est très solide. En général, le gel est un gel obtenu à partir d'un agent filmogène tel qu'une dispersion aqueuse d'alcool polyvinylique, par exemple à 10% environ, et un agent de coagulation tel que le borax ($Na_2B_4O_7$, 10 $H_2O$) sous forme d'une poudre cristalline, prémélangée avec les particules.

L'expression »alcool polyvinylique« est utilisée ici pour désigner des produits couramment vendus dans le commerce et préparés par hydrolyse de l'acétate de polyvinyle. Cette hydrolyse est souvent incomplète et seulement 95% des groupes acétate ont été remplacés par des groupes OH. Le terme »gel« est utilisé dans la présente description et les revendications pour désigner un produit tridimensionnel se séparant de la solution d'alcool polyvinylique quand on lui ajoute un agent de coagulation. Le gel peut lui-même contenir de faibles quantités d'eau qui sont éliminées par séchage.

De tels gels ont été décrits dans des documents antérieurs. Par exemple, dans »Encyclopedia of Polymer Sciences« (Interscience Publishers), on a décrit la formation de gels à partir d'acide borique et d'alcool polyvinylique. Ces gels se formeraient par la réaction suivante:

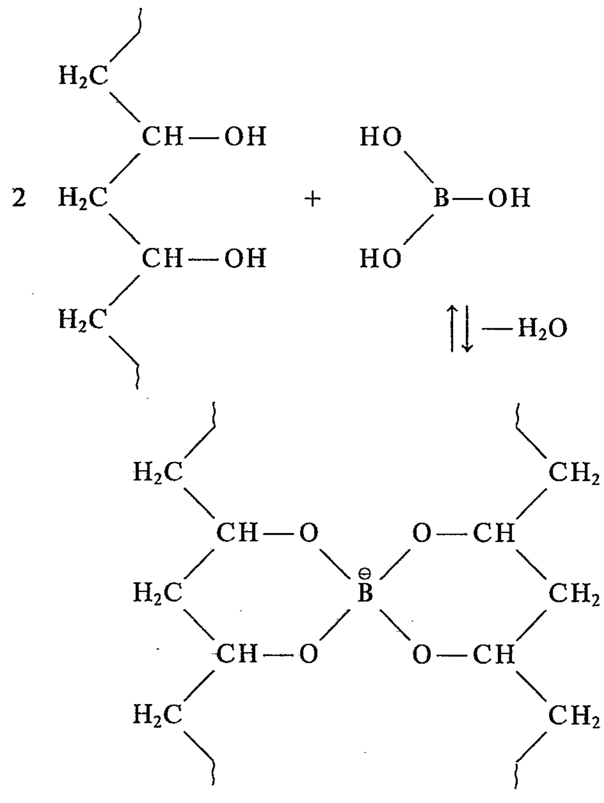

Avantageusement, le rapport du poids de l'agent de coagulation au poids des particules est compris entre 1% environ et 10% environ, de préférence 2%. D'autre part, le rapport du poids de la solution colloïdale au poids des particules peut être de 2% environ à 10% environ, de préférence 5%.

On peut, après l'opération b), projeter de nouveau la solution colloïdale seule. On obtient alors, après séchage, une pellicule insoluble dans l'eau, isolante et résistante au feu du dérivé d'alcool polyvinylique. Cette pellicule donne une finition plus parfaite au produit obtenu.

De préférence, on fait sécher le produit à l'air libre. Puis, on peut éventuellement détacher le produit du support sur lequel il a été déposé.

Les particules utilisées dans la mise en oeuvre du procédé peuvent être choisies dans le groupe formé par les fibres de cellulose, de laine de roche, de laitier, de silice, de verre ou d'amiante, les particules sous forme de microbilles, les micacés et les particules expansées telles que le polystyrène et le liège.

Les avantages du procédé selon l'invention sont nombreux. La réaction du borax et de la solution d'alcool polyvinylique est rapide et forme un gel adhésif. Ce gel colle les fibres et les charges et retient les pigments, ce qui évite une mauvaise répartition de la couleur. Ainsi, on obtient une coloration dans la masse. De plus, l'alcool polyvinylique est insolubilisé par le borax et il devient résistant au feu.

En outre, le conditionnement indépendant de deux compositions, d'une part la solution d'alcool polyvinylique dans l'eau et d'autre part le mélange de particules, de borax et de charges et pigments, permet un très long stockage avant utilisation. De plus, on obtient un produit totalement incombustible dont l'aspect fini est excellent du fait de sa coloration uniforme.

La description qui va suivre, en référence à l'exemple indiqué à titre non limitatif, permettra de bien comprendre comment l'invention peut être mise en pratique.

En atelier, on prépare un mélange A de particules ou notamment de fibres minérales, de grandeur appropriée, avec du borax, dans la proportion de 2 g de borax pour 1 kg de fibres. Ces fibres peuvent être des fibres de cellulose ou des fibres à haute résistance thermique, par exemple de la laine de roche, de laitier ou de silice, des fibres de verre ou même d'amiante. On les utilise seules ou en mélange. On ajoute des pigments en quantité voulue pour obtenir la teinte désirée et des charges.

On prépare une dispersion B à d'alcool polyvinylique dans l'eau.

Sur le chantier ou en atelier, on projette la dispersion B sur un support. Puis on projette le mélange A simultanément avec la dispersion B. On règle facilement le rapport du poids de la dispersion d'alcool polyvinylique au poids des fibres (5% grâce à un double contrôle de débit de projection. L'alcool polyvinylique en solution dans l'eau est alors coagulé par le borax quand il entre en contact avec ce dernier. Il se forme donc un gel adhésif dans la masse des fibres, qui colle et retient les fibres, les pigments et les charges. On laisse sécher la produit à l'air libre ou en étuve. Eventuellement, on

repulvérise la dispersion B, seule, sur le produit, et ce avant séchage, pour obtenir une pellicule insoluble d'alcool polyvinylique sur le produit. Le produit fini peut être détaché du support quand on a déposé préalablement sur celui-ci un agnet de démoulage.

Par ce procédé, on obtient aussi facilement des grandes plaques de produit isolant que de petits objets de formes compliquées. Ces petits objets peuvent être utilisés dans l'industrie, notamment dans l'industrie du bâtiment.

## Revendications

1. Procédé de fabrication d'un produit isolant et incombustible comprenant des particules, un liant organique constitué par un agent filmogène, un agent de coagulation de cet agent filmogène et éventuellement des pigments et des charges, caractérisé par le fait qu'on effectue les opérations suivantes:

a) on projette sur un support une solution colloïdale dans un solvant de l'agent filmogène;
b) sur le support ainsi revêtu, on projette la solution colloïdale et simultanément on projette un mélange de particules, de l'agent de coagulation et éventuellement de pigments et de charges.

2. Procédé selon la revendication 1, caractérisé par le fait que la solution colloïdale est une solution aqueuse d'alcool polyvinylique à 10% environ.

3. Procédé selon la revendication 1 ou 2, caractérisé par le fait que l'agent de coagulation est du borax en poudre.

4. Procédé selon l'une quelconque des revendications 1 à 3, caractérisé par le fait que le rapport du poids de l'agent de coagulation au poids des particules est comprise entre 1% environ et 10% environ.

5. Procédé selon l'une quelconque des revendications 1 à 4, caractérisé par le fait que le rapport du poids de la solution colloïdale au poids des particules est de 2% environ à 10% environ.

6. Procédé selon l'une quelconque des revendications 1 à 5, caractérisé par le fait qu'après l'opération b) on projette la solution colloïdale seule.

7. Procédé selon l'une quelconque des revendications 1 à 6, caractérisé par le fait qu'on fait sécher le produit à l'air libre.

8. Procédé selon l'une quelconque des revendications 1 à 7, caractérisé par le fait qu'on détache le produit du support sur lequel il a été déposé.

9. Procédé selon l'une quelconque des revendications précédentes, caractérisé par le fait que les particules sont choisies dans le groupe formé par les fibres de cellulose, de laine de roche, de laitier, de silice, de verre ou d'amiante, les particules sous forme de microbilles, les micacés et les particules expansées telles que le polystyrène et le liège.

## Patentansprüche

1. Verfahren zum Herstellen feuerfester Isolierstoffe, die aus Partikeln, einem filmbildenden organischen Bindemittel, einem Koagulationsmittel für den Filmbildner und gegebenenfalls Pigmenten und Füllstoffen bestehen, gekennzeichnet durch folgende Verfahrensschritte:

a) auf eine Unterlage wird eine kolloidale Lösung des Filmbildners in einem Lösungsmittel gespritzt,
b) auf die derart beschichtete Unterlage werden die kolloidale Lösung und gleichzeitig ein Gemisch aus Partikeln, dem Koagulationsmittel und gegebenenfalls Pigmenten und Füllstoffen gespritzt.

2. Verfahren nach Anspruch 1, dadurch gekennzeichnet, daß als kolloidale Lösung eine etwa 10%ige wäßrige Polyvinylalkohollösung vorgesehen ist.

3. Verfahren nach Anspruch 1 oder 2, dadurch gekennzeichnet, daß als Koagulationsmittel pulverförmiger Borax vorgesehen ist.

4. Verfahren nach einem der Ansprüche 1 bis 3, dadurch gekennzeichnet, daß das Gewichtsverhältnis von Koagulationsmittel zu Partikeln zwischen etwa 1% und etwa 10% liegt.

5. Verfahren nach einem der Ansprüche 1 bis 4, dadurch gekennzeichnet, daß das Gewichtsverhältnis von kolloidaler Lösung zu Partikeln zwischen etwa 2% und etwa 10% liegt.

6. Verfahren nach einem der Ansprüche 1 bis 5, dadurch gekennzeichnet, daß anschließend an den Verfahrensschritt b) die kolloidale Lösung allein aufgespritzt wird.

7. Verfahren nach einem der Ansprüche 1 bis 6, dadurch gekennzeichnet, daß das Produkt an der freien Luft getrocknet wird.

8. Verfahren nach einem der Ansprüche 1 bis 7, dadurch gekennzeichnet, daß das Produkt von der Unterlage, auf der es hergestellt wurde, abgenommen wird.

9. Verfahren nach einem der vorhergehenden Ansprüche, dadurch gekennzeichnet, daß die Partikel aus der Gruppe: Zellulosefasern, Gesteinsfasern, Schlackenfasern, Siliziumoxidfasern, Glasfasern

oder Asbestfasern gewählt sind und daß sie die Form von Mikrokügelchen, Glimmer, geschäumten Teilchen (etwa Polystyrol) oder Kork haben.

**Claims**

1. Process of manufacture of an insulating and noncombustible product comprising particles, an organic binder constituted by a film-forming agent and a coagulation agent for the film-forming agent and, optionally, pigments and filters, characterized in that the following operations are carried out:

(a) a colloidal solution in a solvent of the film-forming agent is projected on to an support;
(b) the colloidal solution is projected on to the support so coated and simultaneously a mixture of particles and the coagulation agent and, optionally, pigments and filters is projected.

2. Process according to claim 1, characterized in that the colloidal solution is an approximately 10% aqueous solution of polyvinyl alcohol.

3. Process according to claim 1 or 2, characterized in that the coagulation agent is borax powder.

4. Process according to any of claims 1 to 3, characterized in that the ratio of the weight of the coagulation agent to the weight of the particles is between about 1% and about 10%.

5. Process according to any of claims 1 to 4, characterized in that the ratio of the weight of the colloidal solution to the weight of the particles is from about 2% to about 10%.

6. Process according to any of claims 1 to 5, characterized in that, after step (b), the colloidal solution alone is projected.

7. Process according to any of claims 1 to 6, characterized in that the product is dried in the air.

8. Process according to any of claims 1 to 7, characterized in that the product is detached from the support upon which it has been deposited.

9. Process according to any of the foregoing claims. characterized in that the particles are selected from the group formed by fibres of cellulose, rock wool, slag, silica, glass or asbestos, particles in the form of microspheres, micas and expanded particles such as polystyrene and cork.